# EUROPEAN PATENT APPLICATION

(11) **EP 2 639 691 A2**
(43) Date of publication of application: **18.09.2013**
(21) Application number: 12196223.7
(22) Date of filing: 10.12.2012
(51) Int. Cl.: G06F 9/44

(54) **Display control device, display control method, and display control program**

(30) Priority: 16.03.2012 JP 2012060829
(71) Applicant: FUJITSU LIMITED, Kawasaki-shi, Kanagawa 211-8588 (JP)
(72) Inventor: Kikuchi, Satoshi, Kawasaki-shi, Kanagawa 211-8588 (JP)
(74) Representative: Lewin, David Nicholas

(57) **Abstract**

In a display control device (100), a display setting unit (101) creates, according to an operation input to an operation unit (200), a plurality of display settings according respectively to a plurality of moving states and stores the same in a setting information storage unit (400), a moving state determination unit (102) determines a moving state based on a measurement value measured by a sensor (20), and a display control unit (103) changes a screen display on a display (300) according to the moving state by displaying a screen on the display (300) according to any one display setting corresponding to the determination result of the moving state determination unit (102), among a plurality of display settings stored in the setting information storage unit (400).

## Description

### Field

The embodiments discussed herein are directed to a display control device, a display control method and a display control program.

### Background

Conventionally, a user of a mobile terminal device such as a mobile phone starts a desired application by selecting a shortcut corresponding to the desired application (a desired shortcut) from a plurality of shortcuts displayed on a list screen. However, the size of a display provided to a mobile terminal device is small, and the number of shortcuts that are capable of being displayed on one screen at the same time is about twenty at the most. Thus, if a large number of applications are installed in a mobile terminal device, a user has to go through the trouble of displaying, by scrolling, a plurality of screens to find a desired shortcut.

In order to eliminate such a trouble and improve the usability of a menu screen, there is a terminal device that changes, on a menu screen on which a plurality of menu items are displayed, the display mode of each menu item according to the frequency of use of each menu item.

Related-art examples are described, for example, in Japanese Laid-open Patent Publication No. 2004-178363, Japanese Laid-open Patent Publication No. 2003-101629, and Japanese Laid-open Patent Publication No. 2011-139301.

Here, even when the menu item is the same, the frequency of use is different depending on the situation in which the mobile terminal device is being used. For example, a menu item that is frequently used while a user is walking and a menu item that is frequently used while the user is on a train are different. Accordingly, simply changing the display mode of each menu item according to the frequency of use of each menu item does not necessarily render the menu structure easy for a user to use.

Accordingly, it is an object in one aspect of an embodiment of the invention to provide a display control device that enables a mobile terminal device to be easy start of an application according to the use situation of the mobile terminal device.

### Summary

According to an aspect of an embodiment, a display control device included in a mobile terminal device including a display capable of displaying a specific screen for starting an application includes a determination unit that determines a moving state of the mobile terminal device, and a control unit that changes a screen display on the specific screen according to the moving state.

### Brief Description of Drawings

FIG. 1 is a block diagram illustrating an example configuration of a mobile terminal device according to a first embodiment;
FIG. 2 is a block diagram illustrating an example configuration of a display control device according to the first embodiment;
FIG. 3 is a diagram for describing a shortcut table of the first embodiment;
FIG. 4 is a diagram for describing a process of a display setting unit of the first embodiment;
FIG. 5 is a diagram for describing a process of a moving state determination unit of the first embodiment;
FIGS. 6A to 6C are diagrams for describing a process of a display control unit of the first embodiment;
FIG. 7 is a flow chart for describing an operation of the moving state determination unit of the first embodiment;
FIG. 8 is a flow chart for describing an operation of the display control unit of the first embodiment;
FIG. 9 is a flow chart for describing an operation of the display control unit of the first embodiment;
FIG. 10 is a diagram for describing a process of the moving state determination unit of the first embodiment;
FIG. 11 is a diagram for describing a process of a display setting unit of a second embodiment; and
FIGS. 12A to 12C are diagrams for describing a process of a display control unit of the second embodiment.

### Description of Embodiments

Preferred embodiments of the present invention will be explained with reference to accompanying drawings. Additionally, the display control device, the display control method and the display control program disclosed in the present application are not limited by the embodiments. Also, structural elements having the same function in the embodiments are denoted by the same reference signs, and repeated explanation is omitted.

### [a] First Embodiment

### <Configuration of Mobile Terminal Device 10>

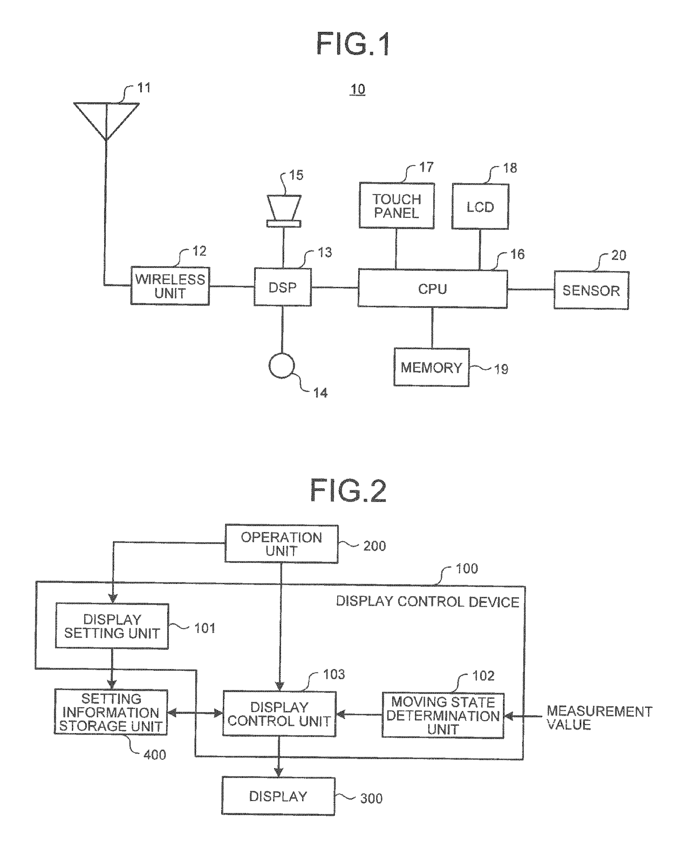

FIG. 1 is a block diagram illustrating an example configuration of a mobile terminal device 10 according to the present embodiment. In FIG. 1, the mobile terminal device 10 includes an antenna 11, a wireless unit 12, a Digital Signal Processor (DSP) 13, a microphone 14, a speaker 15, a Central Processing Unit (CPU) 16, a touch panel 17, a Liquid Crystal Display (LCD) 18, a memory 19, and a sensor 20. The sensor 20 includes both an accelerometer and a gyro sensor, or only the accelerometer.

### <Configuration of Display Control Device 100>

FIG. 2 is a block diagram illustrating an example configuration of a display control device 100 according to the present embodiment. In FIG. 2, the display control device 100 includes a display setting unit 101, a moving state determination unit 102 and a display control unit 103.

Here, the display control device 100 in FIG. 2 corresponds to the CPU 16 in FIG. 1. Also, an operation unit 200 in FIG. 2 corresponds to the touch panel 17 in FIG. 1. Further, a display 300 in FIG. 2 corresponds to the LCD 18 in FIG. 1, and is capable of displaying a specific screen for starting an application. Still further, a setting information storage unit 400 in FIG. 2 corresponds to the memory 19 in FIG. 1. That is, the display control device 100 is provided to the mobile terminal device 10 including the display 300 capable of displaying a specific screen for starting an application.

The display setting unit 101 creates, according to an operation input to the operation unit 200, a plurality of display settings according respectively to a plurality of moving states of the mobile terminal device 10, and stores the same in the setting information storage unit 400.

The moving state determination unit 102 determines the moving state of the mobile terminal device 10 based on a measurement value measured by the sensor 20, and notifies the display control unit 103 of the determination result.

The display control unit 103 displays a screen according to an operation input to the operation unit 200 on the display 300. Also, the display control unit 103 displays a screen on the display 300 according to a display setting corresponding to the determination result of the moving state determination unit 102, among the plurality of display settings stored in the setting information storage unit 400. That is, the display control unit 103 changes the screen display on the display 300 according to the moving state of the mobile terminal device 10 determined by the moving state determination unit 102. Therefore, if the moving state of the mobile terminal device 10 changes, the screen displayed on the display 300 is changed.

### <Process of Display Setting Unit 101>

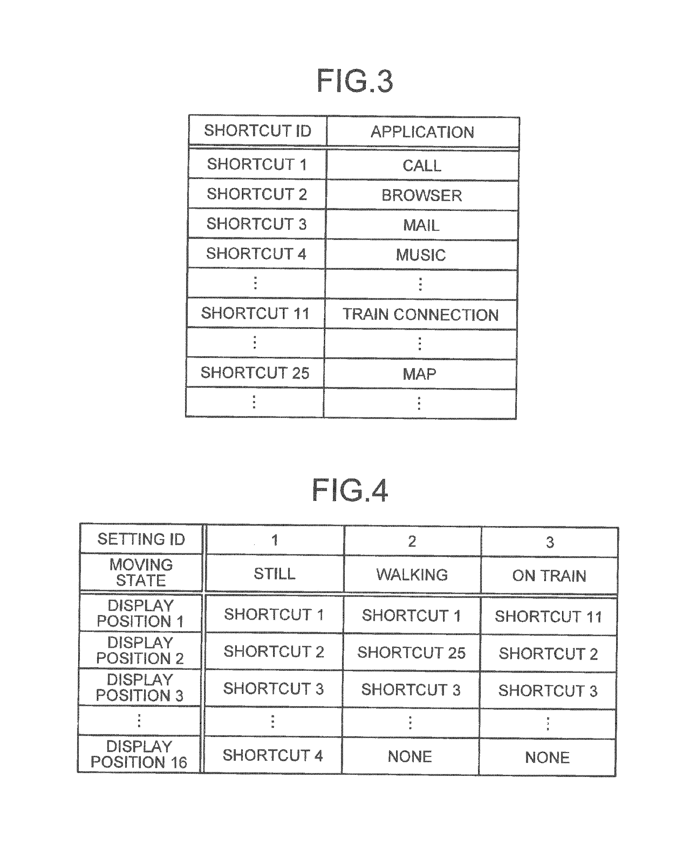

In the case a plurality of applications are installed in the mobile terminal device 10, a shortcut table as illustrated in FIG. 3, for example, is stored in the setting information storage unit 400. As illustrated in FIG.3, each shortcut and each application are associated one-to-one in this shortcut table. In the example illustrated in FIG. 3, "call" is associated with a shortcut 1, "browser" with a shortcut 2, "mail" with a shortcut 3, "music" with a shortcut 4, ..., "train connection" with a shortcut 11, ..., and "map" with a shortcut 25.

A user of the mobile terminal device 10 sets in advance, using the operation unit 200, which shortcut is to be displayed at which position on one screen for each of moving states that are different from one another. For example, in the case a plurality of moving states may be the three states "still", "walking" and "on train", the user of the mobile terminal device 10 is allowed to have a plurality of display settings as illustrated in FIG. 4. That is, the user of the mobile terminal device 10 is allowed to perform display setting of displaying, as "display setting 1" corresponding to the moving state "still", the shortcut 1 at a display position 1, the shortcut 2 at a display position 2, the shortcut 3 at a display position 3, ..., and the shortcut 4 at a display position 16. Also, the user of the mobile terminal device 10 is allowed to perform display setting of displaying, as "display setting 2" corresponding to the moving state "walking", the shortcut 1 at the display position 1, the shortcut 25 at the display position 2, and the shortcut 3 at the display position 3. Furthermore, the user of the mobile terminal device 10 is allowed to perform display setting of displaying, as "display setting 3" corresponding to the moving state "on train", the shortcut 11 at the display position 1, the shortcut 2 at the display position 2, and the shortcut 3 at the display position 3. These display settings 1 to 3 are stored in the setting information storage unit 400.

Additionally, the number of shortcuts that are capable of being set for one moving state is preferably equal to or less than the number of shortcuts that are capable of being displayed at the same time on one screen of the display 300. That is, FIG. 4 illustrates a case where the display 300 is capable of displaying sixteen shortcuts, at the most, at the same time on one screen.

### <Process of Moving State Determination Unit 102>

In the case the sensor 20 includes both an accelerometer and a gyro sensor, a value indicating the amount of vertical movement of the mobile terminal device 10 and a value indicating the amount of rotational movement of the mobile terminal device 10 are input to the moving state determination unit 102 as the measurement value of the accelerometer and the measurement value of the gyro sensor, respectively. The moving state determination unit 102 determines the moving state of the mobile terminal device 10 (that is, the moving state of the user carrying the mobile terminal device 10) based on the amount of vertical movement of the mobile terminal device 10 measured by the accelerometer and the amount of rotational movement of the mobile terminal device 10 measured by the gyro sensor.

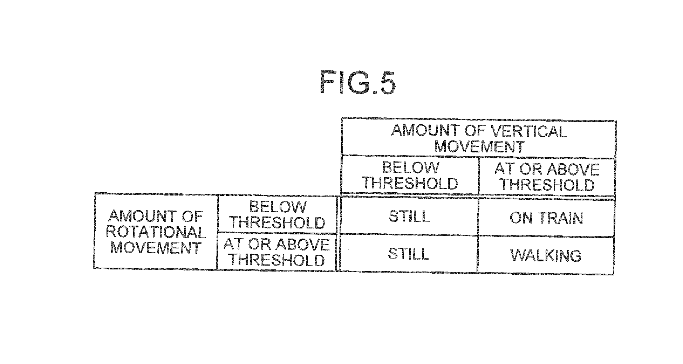

For example, the moving state determination unit 102 determines the moving state of the mobile terminal device 10 in the manner illustrated in FIG. 5. That is, in the case the amount of vertical movement is below a threshold, the moving state determination unit 102 determines that the moving state is "still" regardless of the amount of rotational movement. Also, in the case the amount of vertical movement is at or above the threshold and the amount of rotational movement is below a threshold, the moving state determination unit 102 determines that the moving state is "on train". Furthermore, in the case the amount of vertical movement is at or above the threshold and the amount of rotational movement is at or above the threshold, the moving state determination unit 102 determines that the moving state is "walking".

### <Process of Display Control Unit 103>

In the case an operation instructing display of a specific screen for starting an application is input to the operation unit 200, the display control unit 103 refers to the setting information storage unit 400, and displays the specific screen on the display 300 based on the shortcut table illustrated in FIG. 3 and the display settings illustrated in FIG. 4. This specific screen is a standby screen, a home screen or the like displaying a shortcut that is associated with an application installed in the mobile terminal device 10, for example. The user of the mobile terminal device 10 is allowed to start a desired application by selecting a desired shortcut from the shortcuts displayed on the specific screen. This "specific screen" will be hereinafter referred to as an "application start screen".

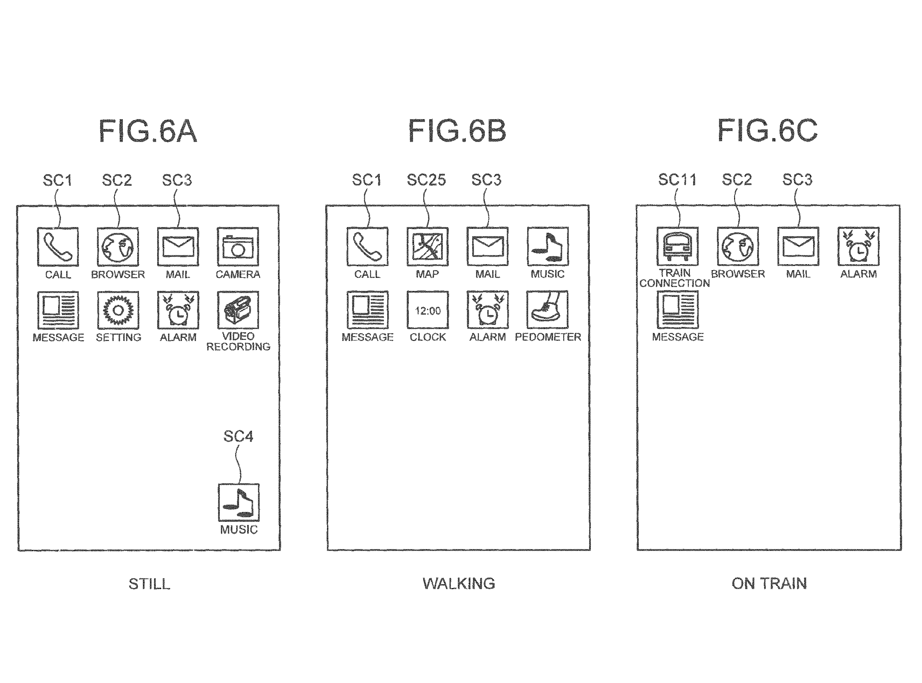

The display control unit 103 changes the display on the application start screen according to the moving state of the mobile terminal device 10 as illustrated in FIGS. 6A to 6C. That is, in the case the determination result of the moving state determination unit 102 is "still", the display control unit 103 displays, according to "display setting 1" in FIG. 4 and as illustrated in FIG. 6A, the shortcut (SC) 1 (call) at the display position 1, the SC 2 (browser) at the display position 2, the SC 3 (mail) at the display position 3, ..., and the SC 4 (music) at the display position 16. Also, in the case the determination result of the moving state determination unit 102 is "walking", the display control unit 103 displays, according to "display setting 2" in FIG. 4 and as illustrated in FIG. 6B, the SC 1 (call) at the display position 1, the SC 25 (map) at the display position 2, the SC 3 (mail) at the display position 3, .... Furthermore, in the case the determination result of the moving state determination unit 102 is "on train", the display control unit 103 displays, according to "display setting 3" in FIG. 4 and as illustrated in FIG. 6C, the SC 11 (train connection) at the display position 1, the SC 2 (browser) at the display position 2, the SC 3 (mail) at the display position 3, .... In this manner, the display control unit 103 displays, on the application start screen, only one or some of the shortcuts, among a plurality of shortcuts registered in the shortcut table (FIG. 3), which have been changed according to the moving state of the mobile terminal device 10.

### <Operation of Moving State Determination Unit 102>

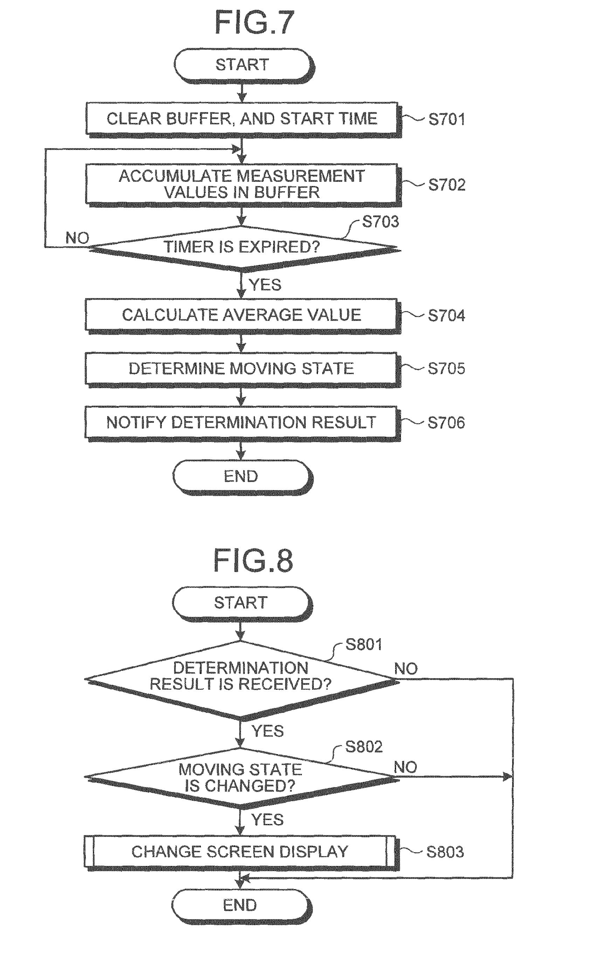

FIG. 7 is a flow chart for describing an operation of the moving state determination unit 102 in the present embodiment.

In FIG. 7, first, the moving state determination unit 102 clears a buffer (not illustrated), and starts a timer (not illustrated) (step S701).

Then, the moving state determination unit 102 accumulates the measurement values of the sensor 20 one by one until the timer expires (step S702, step S703: No).

When the timer expires (step S703: Yes), the moving state determination unit 102 calculates an average value over the time set on the timer of a plurality of measurement values accumulated in the buffer (step S704).

Next, the moving state determination unit 102 determines the moving state of the mobile terminal device 10 based on the average value of the measurement values in the manner illustrated in FIG. 5 described above (step S705).

Then, the moving state determination unit 102 notifies the display control unit 103 of the determination result (step S706).

### <Operation of Display Control Unit 103

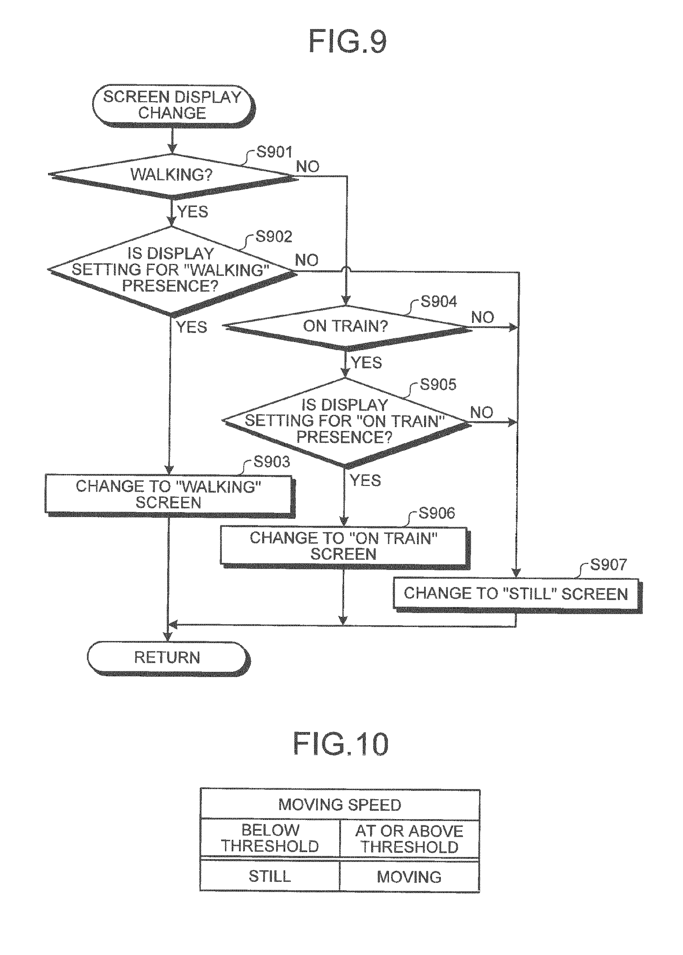

FIGS. 8 and 9 are flow charts for describing an operation of the display control unit 103 in the present embodiment.

In FIG. 8, when the determination result is received from the moving state determination unit 102 (step S801: Yes), the display control unit 103 determines whether the moving state has changed or not (step S802).

When the determination result is not received (step S801: No), or when the moving state is not changed (step S802: No), the process by the display control unit 103 is ended.

On the other hand, when the moving state is changed (step S802: Yes), the display control unit 103 changes the screen display (step S803). A processing flow for changing the screen display is illustrated in FIG. 9.

In FIG. 9, in the case the determination result of the moving state determination unit 102 is "walking" (step S901: Yes), the display control unit 103 checks whether the display setting for "walking" ("display setting 2" in FIG. 4) exists in the setting information storage unit 400 or not (step S902).

In the case the display setting for "walking" exists in the setting information storage unit 400 (step S902: Yes), the display control unit 103 changes the display on the application start screen to a "walking" screen according to the display setting (step S903, FIG. 6B).

In the case the determination result of the moving state determination unit 102 is not "walking", but "on train" (step S901: No, step S904: Yes), the display control unit 103 checks whether the display setting for "on train" ("display setting 3" in FIG. 4) exists in the setting information storage unit 400 or not (step S905).

In the case the display setting for "on train" exists in the setting information storage unit 400 (step S905: Yes), the display control unit 103 changes the display on the application start screen to an "on train" screen according to the display setting (step S906, FIG. 6C).

On the other hand, in the case the determination result of the moving state determination unit 102 is neither "walking" nor "on train" (step S901: No, step S904: No), or the display setting for "walking" does not exist in the setting information storage unit 400 (step S902: No), or the display setting for "on train" does not exist in the setting information storage unit 400 (step S905: No), the display control unit 103 changes the display on the application start screen to a "still" screen according to the display setting for "still" ("display setting 1" in FIG. 4) stored in the setting information storage unit 400 (step S907, FIG. 6A). Here, the display setting for "still" is assumed to be stored in the setting information storage unit 400 without fail.

After the process of step S903, step S906 or step S907, the process returns to step S803 in FIG. 8.

Additionally, in the description above, three states, "still", "walking" and "on train", have been defined as the moving states of the mobile terminal device 10, but the moving state of the mobile terminal device 10 is not limited to the three states. For example, two states, "still" and "moving", may be defined as the moving states of the mobile terminal device 10. In this case, the sensor 20 includes only the accelerometer, and a value indicating the moving speed of the mobile terminal device 10 is input to the moving state determination unit 102 as the measurement value of the accelerometer. The moving state determination unit 102 determines the moving state of the mobile terminal device 10 based on the moving speed of the mobile terminal device 10 measured by the accelerometer and in the manner illustrated in FIG. 10. That is, in the case the moving speed is below a threshold, the moving state determination unit 102 determines that the moving state is "still", and in the case the moving speed is at or above the threshold, the moving state determination unit 102 determines that the moving state is "moving".

Then, in the manner described above, the display control unit 103 displays the screen illustrated in FIG. 6A in the case the moving state is "still", and displays the screen illustrated in FIG. 6B or 6C in the case the moving state is "moving".

Furthermore, in many cases, the mobile terminal device 10 includes a Global Positioning System (GPS) receiver. Accordingly, the moving state determination unit 102 may also determine the moving state of the mobile terminal device 10 based on the moving speed that is capable of being calculated from position information that is capable of being acquired by the GPS function. Therefore, the mobile terminal device 10 including a GPS receiver does not have to include the sensor 20 to acquire the moving speed.

According to the present embodiment described above, in the display control device 100 included in the mobile terminal device 10 including the display 300 capable of displaying the application start screen, the moving state determination unit 102 determines the moving state of the mobile terminal device 10, and the display control unit 103 changes the screen display on the application start screen according to the moving state determined. That is, the display control unit 103 changes the shortcuts displayed on the application start screen according to the moving state of the mobile terminal device 10 (FIGS. 6A, 6B and 6C). This enables to display appropriate shortcuts on the application start screen according to each moving state, and thus, a user of the mobile terminal device 10 is enabled to easily start an application according to the use situation.

Also, according to the present embodiment, the display control unit 103 is able to display only one or some of the shortcuts which have been changed according to the moving state, among a plurality of shortcuts corresponding respectively to a plurality of applications installed in the mobile terminal device 10. Therefore, according to the present embodiment, the burden on a user can be lessened by reducing the number of times of screen scrolling at the time of looking for a desired shortcut. Particularly, by making the number of shortcuts that are capable of being set for one moving state to the number of shortcuts that are capable of being displayed on one screen of the display 300 or less, the screen scrolling at the time of a user looking for a desired shortcut becomes unnecessary, and the burden on the user can be further lessened.

### [b] Second Embodiment

While the shortcuts that are displayed on the application start screen themselves are changed according to the moving state in the first embodiment, in the present embodiment, shortcuts to be displayed in an emphasized manner, among a plurality of shortcuts displayed on the application start screen, are changed according to the moving state.

That is, with the display control unit 103 of the present embodiment, even if the moving state is changed the shortcuts displayed on the application start screen are themselves not changed. On the other hand, with the display control unit 103 of the present embodiment, shortcuts to be displayed in an emphasized manner are changed according to the moving state.

### <Process of Display Setting Unit 101>

As in the first embodiment, a shortcut table as illustrated in FIG. 3 is stored in the setting information storage unit 400.

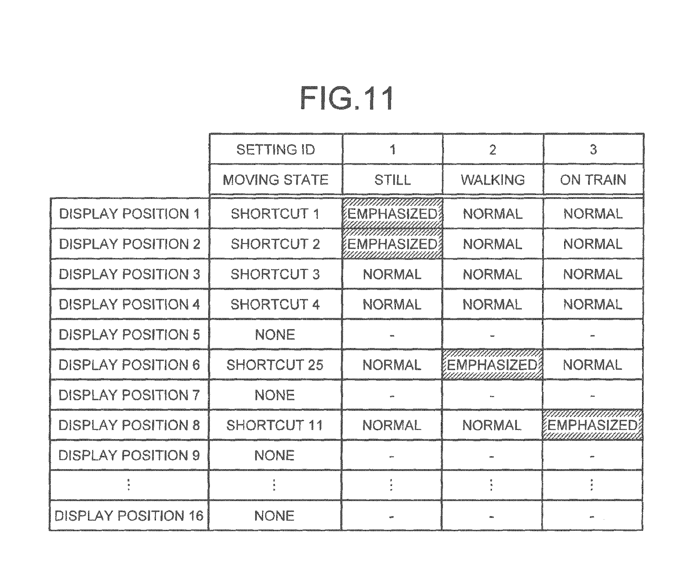

A user of the mobile terminal device 10 sets in advance, using the operation unit 200, which shortcut is to be displayed in an emphasized manner for each of moving states that are different from one another. For example, in the case a plurality of moving states may be the three states "still", "walking" and "on train", the user of the mobile terminal device 10 is allowed to have a plurality of display settings as illustrated in FIG. 11. That is, the user of the mobile terminal device 10 is allowed to perform display setting of displaying, as "display setting 1" corresponding to the moving state "still", the shortcut 1 and the shortcut 2 in an emphasized manner compared to other shortcuts. Also, the user of the mobile terminal device 10 is allowed to perform display setting of displaying, as "display setting 2" corresponding to the moving state "walking", the shortcut 25 in an emphasized manner compared to other shortcuts. Furthermore, the user of the mobile terminal device 10 is allowed to perform display setting of displaying, as "display setting 3" corresponding to the moving state "on train", the shortcut 11 in an emphasized manner compared to other shortcuts. These display settings 1 to 3 are stored in the setting information storage unit 400.

### <Process of Display Control Unit 103>

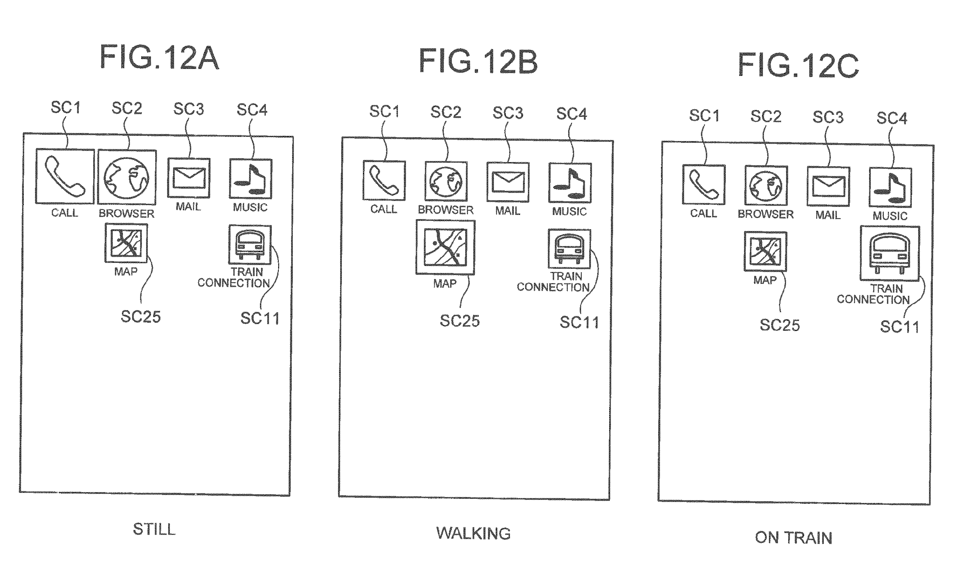

For example, as illustrated in FIGS. 12A, 12B and 12C, the display control unit 103 displays six shortcuts, SC 1, SC 2, SC 3, SC 4, SC 25 and SC 11, on the application start screen regardless of the moving state. On the other hand, as illustrated in FIG. 12A, in the case the determination result of the moving state determination unit 102 is "still", the display control unit 103 displays the SC 1 and the SC 2 in an enlarged manner so as to display them in a more emphasized manner than other shortcuts. Also, as illustrated in FIG. 12B, in the case the determination result of the moving state determination unit 102 is "walking", the display control unit 103 displays the SC 25 in an enlarged manner so as to display it in a more emphasized manner than other shortcuts. Furthermore, as illustrated in FIG. 12C, in the case the determination result of the moving state determination unit 102 is "on train", the display control unit 103 displays the SC 11 in an enlarged manner so as to display it in a more emphasized manner than other shortcuts. In this manner, the display control unit 103 of the present embodiment changes the shortcut to be displayed in an enlarged manner according to the moving state to thereby change the shortcut to be displayed in an emphasized manner.

Additionally, the method of emphasized display is not limited to be based on the size of the display. For example, the emphasized display may be performed based on the brightness of the display. That is, the display control unit 103 may display the shortcut to be displayed in an emphasized manner more brightly than other shortcuts, and change the shortcut to be displayed brightly according to the moving state.

As described above, according to the present embodiment, the display control unit 103 changes a shortcut to be displayed in an emphasized manner, among a plurality of shortcuts displayed on the application start screen, according to the moving state of the mobile terminal device 10. An appropriate shortcut can thereby be displayed in an emphasized manner according to each moving state, and a user of the mobile terminal device 10 is enabled to easily start an application according to the use situation.

Heretofore, the embodiments of the present invention have been described.

Additionally, in the present invention, items whose display is capable of being changed according to the moving state are not limited to the shortcuts. The present invention is capable of being applied not only to the shortcuts, but also to all the items that are capable of being displayed on a screen by the mobile terminal device 10, such as menu items and the like.

Moreover, the present invention can be carried out by storing a display control program having the same function as the display control device 100 in advance in the memory 19 and having the CPU 16 read from the memory 19, and execute, the display control program. In this case, the CPU 16 is to perform the same processing as the display control device 100. Furthermore, the display control program does not necessarily have to be stored in advance in the memory 19. That is, the display control program may be stored in portable recording media that can be connected to the mobile terminal device 10, such as a flexible disc (FD), a CD-ROM, an MO disc, a DVD disc, a magneto-optical disc, an IC card, a memory card and the like, for example, and the CPU 16 may read from these, and execute, the display control program. Also, the display control program may be stored in a computer, a server and the like connected to the mobile terminal device 10 wirelessly or via wire over the Internet, LAN, WAN and the like, for example, and the CPU 16 may read from these, and execute, the display control program.

According to the above-described modes of the display control device, the display control method and the display control program disclosed in the present application, an application according to the use situation of a mobile terminal device can be easily started.

## Claims

1. A display control device (100) included in a mobile terminal device (10) including a display (300) capable of displaying a specific screen for starting an application, comprising:
a determination unit (102) that determines a moving state of the mobile terminal device; and
a control unit (103) that changes a screen display on the specific screen according to the moving state.

2. The display control device (100) according to claim 1, wherein the control unit (103) displays on the specific screen only one or some of items which have been changed according to the moving state, among a plurality of items corresponding respectively to a plurality of applications installed in the mobile terminal device.

3. The display control device (100) according to claim 2, wherein the number of the one or some of items is equal to or less than the number of the items that are capable of being displayed on one screen of the display.

4. The display control device (100) according to any of the preceding claims, wherein the control unit (103) changes an item to be displayed in an emphasized manner, among a plurality of items displayed on the specific screen, according to the moving state.

5. The display control device (100) according to claim 4, wherein the control unit (103) displays the item to be displayed in the emphasized manner larger than another item.

6. The display control device (100) according to claim 4 or 5, wherein the control unit (103) displays the item to be displayed in the emphasized manner brighter than another item.

7. The display control device (100) according to any one of claims 1 to 6, wherein the determination unit (102) determines the moving state based on a moving speed of the mobile terminal device.

8. The display control device (100) according to any one of claims 1 to 7, wherein the determination unit (102) determines the moving state based on an amount of vertical movement and an amount of rotational movement of the mobile terminal device.

9. A mobile terminal device (10) comprising a display control device (100) according to any one of claims 1 to 8.

10. A display control method for a display capable of displaying a specific screen for starting an application, the method comprising:
determining a moving state of a mobile terminal device including the display; and
changing a screen display on the specific screen according to the moving state.

11. A program for controlling a display capable of displaying a specific screen for starting an application, the program causing a processor to execute a process comprising:
determining a moving state of a mobile terminal device including the display; and
changing a screen display on the specific screen according to the moving state.
